Europäisches Patentamt

European Patent Office

Office européen des brevets

(11) Publication number: 0 202 004
A2

# (12) EUROPEAN PATENT APPLICATION

(21) Application number: 86302240.6

(22) Date of filing: 26.03.86

(51) Int. Cl.⁴: **B22D 11/10** , C04B 28/26 , C04B 26/12

(30) Priority: 20.04.85 GB 8510143

(43) Date of publication of application:
20.11.86 Bulletin 86/47

(84) Designated Contracting States:
AT BE CH DE FR GB IT LI LU NL SE

(71) Applicant: FOSECO INTERNATIONAL LIMITED
285 Long Acre
Nechells Birmingham B7 5JR(GB)

(72) Inventor: **Taft, Charles**
**19 Greendale Road**
**Atherstone Warwickshire(GB)**
Inventor: **Barnes, Andrew**
**6 Castle Hall Glascote**
**Tamworth Staffordshire(GB)**
Inventor: **Flood, James**
**4 Lomax Close**
**Lichfield Staffordshire(GB)**

(74) Representative: **Warman, Charles Alfred**
**Group Patents Department Foseco Minsep**
**International Limited 285 Long Acre**
**Nechells Birmingham B7 5JR(GB)**

(54) **Pouring tubes.**

(57) A pouring tube, for use in metal casting e.g. in continuous casting between e.g. a ladle and a tundish, comprises an outer metal casing and an inner lining formed of a self-set, foamed, refractory composition in which the inner lining is formed from a self-setting, foamed, refractory composition comprising particulate refractory material, surfactant and as binder an alkali metal silicate or an alkali-stabilised phenol-formaldehyde resol resin and as setting agent for the binder a liquid ester.

EP 0 202 004 A2

# POURING TUBES

This invention relates to pouring tubes for use in the casting of molten metal and to a method for the production of pouring tubes.

The invention is particularly suited to the continuous casting of metals particularly in respect of pouring tubes for use between a ladle and a tundish.

In continuous casting, molten metal e.g. steel is passed from a ladle into a tundish which serves to maintain a constant head of molten metal. The metal flows out from the base of the ladle into the tundish through a nozzle such as for example, a slide-gate nozzle and from the tundish into one or more continuous casting moulds via one or more nozzles located in the base of the tundish. The quality of the cast metal, withdrawn from the base of the mould as a strand for subsequent use as billets, blooms or slabs, can be adversely affected by oxide and other non-metallic inclusions which may be entrained if the molten metal stream is not protected adequately as it flows between the ladle and the mould or moulds.

A number of proposals have been suggested in which the stream of molten metal flowing from the base of a ladle is surrounded by a ladle stream protection tube i.e. a pouring tube. Use of the tube minimises the deleterious oxidation effects of atmospheric oxygen on the molten metal.

Moreover, inert gas e.g. argon can be passed through the tube and around the molten metal stream thereby enhancing the minimisation of access by atmospheric oxygen and nitrogen to the stream.

It is known that pouring tubes may comprise a tubular structure formed of a preformed tubular refractory, heat-insulating material encased by an outer casing of thin sheet metal e.g. steel.

In the past the pre-formed, tubular, refractory, heat-insulating portion has required complex slurry-handling methods to be utilised together with their associated time-consuming, high energy consumption drying processes.

We have now found that these forming difficulties and disadvantages may be minimised by means of a self-setting, foamed refractory composition.

According to the present invention there is provided a pouring tube comprising an outer metal casing having an inner lining formed of a self-setting, foamed, refractory composition comprising a particulate refractory material, surfactant and a binder system comprising:

a) as binder, aqueous alkali metal silicate or an alkali-stabilised aqueous solution of a phenol-formaldehyde resol resin and

b) as setting agent for the binder, an ester in liquid form.

The refractory compositions used to form the inner lining of pouring tubes of the invention are particularly suitable for application, into the cavity defined between the outer metal casing and a removable former or mandrel, by means of a pump. After setting and drying the refractory composition provides a pouring tube having a highly erosion resistant lining capable of withstanding the erosive effects of molten metal and any accompanying slag passing through the tube. The lining is also heat-insulating in contrast to a typical ceramic pouring tube.

The binder system enables advantageous setting times to be obtained. Preferably, adequate lining strength is achieved within 40 to 80 minutes in the 12° to 30°C temperature range thus enabling the mandrel to be removed. The bench life of the self-setting composition may be from 4 to 15 minutes but typically is about 10 minutes.

The particulate refractory material is preferably calcined magnesite (which may be dead-burnt magnesite), and/or one or more of calcined dolomite, olivine, zircon, alumina, calcined bauxite, silica, chromite, corundum, or other neutral oxides or silicates. The total amount of particulate refractory material present in the composition may be from 70 to 95% by weight, preferably 80 to 85% by weight.

The surfactant may be anionic, cationic, amphoteric or non-ionic. Preferred surfactants are the anionic ones e.g. long chain alkyl sulphates or alkyl ether sulphates. The quantity of surfactant used in the refractory compositions of the invention will vary with its character but generally will be from about 0.01 to 1.0% by weight surfactant solids.

The aqueous alkali metal silicate of the refractory composition according to the invention is preferably an aqueous sodium silicate having a solids content of 40 to 60% by weight and a $SiO_2$ :$Na_2O$ ratio of from 2 to 3:1. The alkali-stabilised aqueous solution of phenol-formaldehyde resol resin is preferably one which has been prepared by reacting together a monohydric phenol such as phenol or a cresol, or a dihydric phenol such as resorcinol or mixtures thereof, and formaldehyde under alkaline conditions. The molar ratio of phenol to formaldehyde will usually be from 1:1 to 1:3. The alkaline conditions are preferably established by adding sodium hydroxide or potassium hydroxide to an aqueous solution of the resin. The amount of alkali metal silicate employed is preferably from 1 to 5% by weight of silicate solids and the amount of resin employed is preferably 0.9 to 3% by weight of resin solids. The hardening or setting reaction of the alkali metal silicate or phenol-formaldehyde resol resin is effected by means of an ester in liquid form. The selection of the ester or esters provides a means of effecting a wide range of control over the setting reaction. Preferably the setting time is from 40 to 120 minutes.

The ester or mixture of esters may be, for example, selected from glycerol diacetate - (diacetin) glycerol triacetate (triacetin), ethylene glycol diacetate, butylene glycol diacetate, propylene carbonate, $\gamma$-butyrolactone, $\epsilon$-caprolactone or any other cyclic ester.

The amount of ester employed is preferably from 20 to 40% by weight of the quantity of phenol-formaldehyde resol resin used, more preferably about 30%, or, in the case of alkali metal silicate, the amount of ester is preferably from 8 to 20% by weight, more preferably about 12%. The ester or mixed esters used to set an alkali metal silicate may be selected from for example diacetin, triacetin or ethylene glycol diacetate.

Additionally a proportion of a sinter aid may be included in the refractory composition. This additive is of particular utility when a phenol-formaldehyde resol resin is used, as this binder is lower in residual alkali oxides than an alkali metal silicate and therefore may not itself provide a significant proportion of sinter aid. As sinter aid one or more of sodium borate, calcium tetraborate or powdered glass may be present in amounts upto 2% by weight of the refractory composition another sinter aid is ball clay which maybe present upto 6% by weight. Within these concentrations, the sinter aid enhances the integrity of the refractory composition.

The refractory compositons used to form the inner lining of pouring tubes according to the invention may also include upto 10% by weight of a particulate carbonaceous material e.g. graphite. It has been found that such carbonaceous material improves the erosion resistance of the composition. Also the erosion resistance maybe enhanced, by the inclusion of for example, by silicon carbide, silicon nitride or boron nitride.

The inner lining of the pouring tubes of the invention maybe effected by any means suitable for handling foamed compositions. However, a particularly preferred method of lining the outer casing of the pouring tube is to pump, the self-setting, foamed refractory composition e.g. by means of a worm pump into a gap defined between a removable former or mandrel. The gap defined between the former and the casing should preferably be in the 15 to 40 mm range and typically about 25 mm.

The self-setting foamed, refractory composition used to form the inner lining of pouring tubes according to the invention may be formed by mixing the constituents thereof together in any order, although, generally it is preferred that the particulate refractory material should be first mixed with the sufactant followed by the ester or esters and lastly the aqueous alkali metal silicate or alkali-stabilised aqueous solution of phenol-formaldehyde resol resin. It is generally preferred that the refractory composition should contain from about 10 to 20% of water.

The foamed composition once formed may be applied by being pumped into the gap defined by the former and the outer metal casing and allowed to harden or set. In most applications 30 to 180 minutes will be satisfactory although 40 to 120 minutes will be generally preferred.

After setting the former is withdrawn and residual water is removed. This removal may be hastened by drying at temperatures of upto 200°C.

On examination after drying a foamed structure remains affording enhanced insulation properties.

The density of the pouring tube lining after drying maybe in the range of 1-2 g.cm$^{-3}$. Optimum properties are generally obtained when the density of the lining is in the range 1.3-1.8 g.cm$^{-3}$.

According to another aspect of the present invention there is provided a method of forming a pouring tube which comprises inserting a former or mandrel into a tubular sheet metal casing so as to define a gap therebetween corresponding in thickness to that of the lining to be formed and introducing into the gap a composition (as hereinbefore defined) until the gap between the former or mandrel and the casing is filled, allowing the composition to set, removing the former or mandrel and heating the lining to remove substantially all the water retained by the lining after setting.

According to a still further aspect of the present invention there is provided a method of casting in which molten metal is transferred from an outlet in a metallurgical ladle to a metallurgical tundish via a pouring tube as hereinbefore defined said pouring tube being attached to the exit nozzle of the ladle.

The invention is more particularly described with reference to the following Examples.

## EXAMPLE 1

| Ingredient | % |
|---|---|
| Dead-burnt magnesite (Supplied by Radex GmbH, designated as Grade HBG Normal) | 84.4 |
| 0.8% solids solution of sodium alkyl sulphate (Average m.w. 260) | 10.2 |
| Glycerol triacetate | 1.0 |
| Alkali-stabilised aqueous solution of phenol-formaldehyde resol resin (solids content 60%) | 3.4 |
| Sodium tetraborate | 1.0 |

(Total water content 11.5%)

The magnesite, sodium tetraborate and surfactants were added together in a planetary mixer and mixed for 2 minutes resulting in a foamed mixture, the glycerol triacetate was added to the foamed mixture and mixed for 1 minute followed lastly by the resin which was also mixed for 1 minute. The intial density of the foamed mixture after setting was 1.46 g.cm$^{-3}$. After subsequent drying the density was 1.35 g.cm$^{-3}$.

Prior to drying the foamed mixture was pumped using a worm pump manufactured by Putzmeister to provide a 25 mm thick inner tubular lining in a steel tube of 1100 m length and 1 mm wall thickness using a suitable tubular former. The ambient temperature was 20°C. The bench life of the composition was 10 minutes. The former was removed after 60 minutes and the tube thus formed was dried at 180°C for 4 hours.

The pouring tube was evaluated by immersing the lower 100 mm portion in a bath of molten steel held in an induction furnace at a temperature of 1640°C. Although, the outer steel casing melted, the foamed structure refractory lining exhibited only 10-12 mm of wear at the molten steel/slag interface after 1 hour and only 2 mm at the level below the said interface.

Having regard to the severity of the test conditions, these results indicate that the refractory composition yields good erosion resistance.

## EXAMPLE 2

| Ingredient | % |
| --- | --- |
| Dead-burnt magnesite (As Example 1) | 81.23 |
| 1.5% solids solution of sodium alkyl sulphate (Average m.w. 260) | 9.70 |
| Aqueous sodium silicate (50% solids content $SiO_2$:$Na_2O$ ratio 2:1) | 8.10 |
| Glycerol triacetate/ Glycerol diacetate (70:30 parts by weight) | 0.97 |

(Total water content 13.8%)

The ambient temperature was 20°C, the bench life of the foamed composition was 10 minutes and the former was removed after 70 minutes.

The experimental procedure described in Example 1 was substantially repeated, with similar satisfactory results.

**Claims**

1. A pouring tube comprising an outer metal casing and an inner lining characterised in that the inner lining is formed of a self-set, foamed, refractory composition which comprises a particulate refractory material and a binder system comprising:-

a) as binder, an alkali metal silicate or an alkali-stabilised phenol-formaldehyde resol resin and

b) as setting agent for the binder a liquid ester.

2. A pouring tube according to claim 1 characterised in that the particulate refractory material of the inner lining is selected from one or more of calcined magnesite, calcined dolomite, olivine, zircon, alumina, calcined bauxite, silica, chromite and corundum.

3. A pouring tube according to claim 1 characterised in that the particulate material of the inner lining is a basic refractory material.

4. A pouring tube according to any preceding claim characterised in that the proportion of refractory material of the inner lining is from 70 to 95% by weight.

5. A pouring tube according to any preceding claim characterised in that the alkali-stabilised phenol-formaldehyde resol resin of the inner lining has a molar ratio of phenol to formaldehyde of from 1:1 to 1:3.

6. A pouring tube according to claim 5 characterised in that the proportion of alkali-stabilised phenol-formaldehyde resol resin is from 0.9 to 3% by weight.

7. A pouring tube according to any preceding claim characterised in that the liquid ester of the inner lining is selected from one or more of an ester of glycerol, an ester of ethylene glycol, a carbonate ester and a lactone.

8. A pouring tube according to claim 5 or claim 6 characterised in that the proportion of liquid ester is from 20 to 40% by weight of the resin.

9. A pouring tube according to claim 1 characterised in that the binder of the inner lining comprises an alkali-stabilised phenol-formaldehyde resol resin and the refractory composition also contains a sinter aid.

10. A pouring tube according to claim 9 characterised in that the sinter aid is selected from one or more of sodium borate, calcium tetraborate, powdered glass and ball clay.

11. A pouring tube according to any preceding claim characterised in that the density of the inner lining is from 1 to 2 g.cm$^{-3}$.

12. A method of forming a pouring tube according to any of claims 1 to 11 characterised by introducing, a self-setting, foamed, refractory composition comprising a particulate refractory material, a surfactant, and a binder system comprising:-

a) as binder, aqueous alkali metal silicate or an alkali-stabilised aqueous solution of a phenol-formaldehyde resol resin and

b) as setting agent for the binder a liquid ester,

into a gap defined between a removable former and a tubular sheet metal casing until the gap between the former and casing is filled, allowing the composition to set, removing the removable former and drying the inner lining to remove residual water.

13. A method according to claim 12 characterised in that the surfactant is anionic.

14. A method according to claim 13 characterised in that the surfactant is a long chain alkyl sulphate or alkyl ether sulphate.

15. A method according to any of claims 12 to 14 characterised in that the proportion of surfactant is from 0.01 to 1.0% by weight surfactant solids.

16. A method according to any of claims 12 to 15 characterised in that the aqueous alkali metal silicate is aqueous sodium silicate having a solids content of 40 to 60% by weight and a $SiO_2:Na_2O$ ratio of from 2 to 3:1.

17. A method according to claim 16 characterised in that the proportion of sodium silicate is from 1 to 5% by weight of silicate solids.

18. A method according to claim 16 or claim 17 characterised in that the proportion of liquid ester is from 8 to 20% by weight of the alkali metal silicate.

19. A method of casting molten metal characterised in that the molten metal is transferred from an outlet in a casting ladle in to a continuous casting tundish via pouring tube according to any of claims 1 to 11.